# EUROPEAN PATENT APPLICATION

(11) **EP 1 209 197 A1**
(43) Date of publication of application: **29.05.2002**
(21) Application number: 99944645.3
(22) Date of filing: 27.08.1999
(51) Int. Cl.: C08L 27/18, C08L 27/12

(54) **FLUID COMPOSITION FOR PRODUCING AND REPAIRING ION EXCHANGE MEMBRANES**

(30) Priority: 22.07.1999 ES 9901653
(71) Applicant: David Systems Technology S.L., 28006 Madrid (ES)
(72) Inventor: BLACH VIZOSO, Ricardo, E-48950 Asua-Erandio (ES)
(74) Representative: Carpintero Lopez, Francisco
(86) International application number: ES9900278
(87) International publication number: WO0107517

(57) **Abstract**

A fluid composition that contains perfluorinated copolymer of ion exchange with functional groups ―SO₃M, M-hydrogen ions or ions of alkali metals (EM greater than 900) and a polar organic solvent and a non-polar solvent, and as perfluorinated ion exchange copolymer, the composition contains a perfluorinated copolymer of ion exchange with a degree of crystallinity of 2 to 10% and a ratio between the density of the copolymer of ion exchange and the density of the original perfluorinated copolymer in non-ionic form of 0.90-0.97. The ratio of the components is, in % by weight:
Perfluorinated copolymer of ion exchange 1-35
Organic polar solvent or mixture of organic polar solvent with non-polar solvent 65-99.

Such compositions are used in the production and reparation of ion exchange membranes, which are used in the alkaline electrolysis with chlorine or in aqueous electrolysis in cells for separating fuel and gas.

## Description

### OBJECT OF THE INVENTION

The invention relates to a liquid composition (fluid) based on a perfluorinated copolymer of ion exchange with functional groups -SO₃M (M-H, Na, K or Li) and a polar organic solvent or a mixture of organic solvents. Such compositions could be used for the production and reparation of ion exchange membranes (IEM), which are used in aqueous alkaline electrolysis, in cells for separation of fuel and gas, and also for the impregnation of different substrates, for the production of superacidic catalysts for the synthesis of organic compounds, etc.

### BACKGROUND OF THE INVENTION

Solutions are already known (Japanese patent no. 13333.73, IPC 25(1) C122.2, published on the 26/04/73) which contain a perfluorinated copolymer of ion exchange with functional groups -SO₃M, M-hydrogen, monobasic amine, alkali metal atoms and a polar organic solvent. The composition contains a hydrolysed copolymer of tetrafluorethylene (TFE) with vinyl ether, which contains sulphur (SVE) as perfluorinated copolymer of ion exchange, which may be, for example, the following: 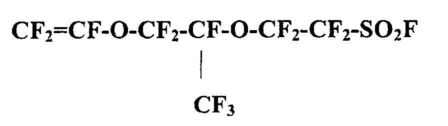 or the copolymer of tetrafluoroethylene with vinyl ether, which contains sulphur with the following formula:

CF₂=CF-O-CF₂-CF₂-SO₂F

with an equivalent mass (EM) of 400-1000.

As a polar organic solvent, the composition contains a solvent which is chosen from the group of aliphatic alcohols with a number of carbon atoms not greater than 4 (methanol, ethanol, isopropanol, n-propanol, n- iso- and terc- butanol), fluoroalcohols H(CF₂)₄CH₂OH, substituted amides (dimethylformamide, dimethylacetamide, etc), cellosolve, acetone and others.

The composition is obtained by mixing the copolymer with the solvent while heating to 22-170° C and shaking. (In the Japanese patent no. 13333.7 details such as the duration, the possibility of concentration, etc., are not presented). When the components are mixed, a composition is obtained which contains from 0.09 to 30% by weight of copolymer. Using this composition, it is possible to obtain IEMs used in electrolysis and separator filters of batteries by means of spraying or impregnation. The copolymer content in the composition depends appreciably on the EM of the copolymer used. When a copolymer with a value for EM of 400-860 is used, it is possible to obtain a composition with 30% by weight of copolymer, and using a copolymer with an EM of 860-1000 it is possible to obtain a composition with 0.5-1% by weight.

The disadvantages of the fluid composition described are as follows:
1. When ion exchange copolymers are used with low values for EM (not greater than 1000) for the composition, the films obtained (membranes) are not strong enough, especially at high temperatures. Thus, the IEM produced from such compositions cannot work for long periods of time in fuel cells (FC), in aqueous electrolysis or in alkaline electrolysis with chlorine. In addition, the IEMs produced from a copolymer with EM < 1000, despite being produced by impregnation, are not suitable for alkaline hydrolysis with chlorine because of their low selectivity and high permeability towards gases.
2. The low contents of copolymers (0.54-1%) when a copolymer is used with a relatively low EM (860-100) due to the small thickness (5-6 µm) of the film after the composition has been applied to the base. Thus, it would be necessary to apply the film 25-30 times with the obligatory elimination of solvent and the subsequent agglomeration to produce the IEM that is normally used for electrolysis and in the FCs (150-200 µm thick). The compositions that contain copolymers with low EM values (lower than 860) could be used for producing IEM in the form of films or fibres because of their low resistance, although the content of copolymer would be greater than 30% by weight.

A polymeric composition is also known which contains a perfluorinated polymer with sections that can be converted into ion exchange groups and a solvent (URSS patent no. 1769760, IPC C 08 L 27/12, published on the 15/10/92). As a perfluorinated polymer, the composition contains from 0.3 to 13.9% by weight of copolymer of tetrafluoroethylene and monomers chosen from the group that contains:

CF₂=CF-O-CF₂-CF₂-SO₂F (I)

and

CF₂=CF-O-CF₂-CF₂-COOCH₃ (II).

The EM of copolymer (I) of tetrafluoroethylene and monomer is 850 to 1160 and the EM of copolymer (II) of tetrafluoroethylene and monomer is from 755 to 847, in other words, the EM of the copolymer that is used in the composition is from 755 to 1160. As a solvent, the composition contains 99.7-86.2% by weight of 1,2-dibromothetrafluorethane (DBTFE).

The polymeric composition indicated is obtained by mixing the perfluorinated copolymer in non-ionic form (with -SO₂F or -COOCH₃ groups) with the main portion of the DBTFE in the laboratory in the percussion mill with horizontal grinders for 12 hours. After adding the remaining part of the DBTFE the mixture is shaken for a further 3 hours. The composition obtained is a dispersion of 0.3 to 13.8% of perfluorinated copolymer in DBFTE. The IEM is produced from the composition by applying the dispersion to an aluminium sheet and then provoking agglomeration at 250-303°C. The dispersion is applied to the sheet 2-5 times until the necessary thickness of the film is obtained. The film obtained is hydrolysed by means of an aqueous solution at 25% of sodium hydroxide, at 90° C, for 16 hours, to convert the original groups of the perfluorinated copolymer that are non ion-exchange into ion exchange groups. Afterwards, the hydrolysed film is used as an IEM in an electrolytic cell to obtain chlorine and alkalis.

The disadvantages of the composition after application of USSR patent no. 1769760 are:
1. It is impossible to obtain IEM directly from the indicated polymeric composition because the composition contains the copolymer with non-ionic groups and requires an additional hydrolysis of the films formed to convert these groups into ion exchange groups.
2. The need to use high temperatures (of approximately 250 to 300° C) when the films or other articles are obtained, because the polymeric composition is the dispersion of the copolymer in the solvent and high temperatures are required for agglomeration of the copolymer.
3. The limited field of application of the composition, because the composition cannot be used for impregnating materials with no thermal resistance and those materials that are chemically unstable, such as paper, carbon, polyethylene and others, used as filters in the pharmaceutical industry or in medicine, which cannot withstand the high temperatures of agglomeration and the hydrolysis using a solution at 25% of sodium hydroxide, at 90° C, for 16 hours, which are necessary to convert the non-ionic groups.

The most similar to the composition claimed in terms of essential properties is a fluid composition in accordance with USSR patent no. 128610 (IPC³ C08 J 3/02, published on the 23/01/87) which contains a perfluorinated copolymer of ion exchange with functional groups -SO₃M, M-hydrogen and ions of alkali metals (Na or K), (EM 1050-1500) and a solvent. As a perfluorinated copolymer of ion exchange, the composition contains, for example, hydrolysed tetrafluoroethylene and perfluoride (3,6-dioxy-4-methyl-7-octensulphonylfluoride) (TFE/PSEPVE) with an EM of 1050-1500. As a solvent, the composition contains water or a mixture of 20 to 80% by weight of water and 80 to 20% by weight of polar organic solvent (methanol, ethanol, n-butanol and others). In 100 ml of the composition there are from 0.2 to 13 g of diluted copolymer. Such compositions are used for the production and reparation of the IEMs that are used in electrolysis. From the compositions indicated it is possible to obtain IEM directly, as the composition contains copolymer with ion exchange groups.

The disadvantages of the composition of the USSR patent no. 1286108 are:
1. A limited field of application of the composition related to the low resistance of the articles obtained therefrom - films or fibres, and the relatively low EM of the ion exchange copolymer that is used in the composition (1050-1500). In this fashion, the resistance to breakage of the film produced from the fluid composition based on the copolymer with EM 1100, formed at 120° C, is 17.7 MPa (see example 3 in the specification of the USSR patent no. 1286108). Although this resistance is achieved by means of additional injection of triethylphosphate (110% of the polymeric mass), it is maintained in the film obtained from the copolymer. The low resistance of the articles obtained - films or fibres, does not allow them to be used directly as IEM (without additional reinforcement, for example, in the FC or as fibres of gas separation. The relatively narrow range of the EM of the copolymer prevents such films from being used as membranes for an efficient distribution, normally a copolymer with EM > 1500 is required. In addition, such a composition cannot be used to obtain detectors of hydrogen for the dehydration of gases and some other applications, as a copolymer with an EM > 1500 is also required.
2. The complication of the production of the composition is related to the need to mix the components at high temperatures (170-250° C) under pressure and heating for long periods under the mentioned temperatures (3-18 hours) and the subsequent distillation of the solvent. Probably, this complication of the production is conditioned by the copolymers with a high degree of crystallinity and density ratio, which are not very soluble in organic solvents, a little more so in water, which are maintained in the composition. The density ratio of the copolymer of ion exchange is the ratio of the density of the copolymer of ion exchange and the density of non-hydrolysed copolymer itself in non-ionic form with no groups of ion exchange. It is known that, normally, the copolymers of tetrafluoroethylene with vinyl ether that contain perfluorosulphide groups (TFE/PSEPVE), for example, the commercial brand Nafion, Du Pont Company (ACS Symposium Perfluorinated Ionomer Membranes, Lake Buena Vista, Florida, 1982, 180, pages 217-248) have a high degree of crystallinity. Thus, when the EM of the copolymer is 1100, the degree of crystallinity is 12%, when the EM is 1200 the degree of crystallinity is 19% and when the EM is 1400 the degree of crystallinity is 20%. Regarding the density of the copolymer indicated in J. Appl. Polym. Sci., (V50, pages 1445-1452, 1993) and the data of the present applicants, this is 0.993 and 0.995.

### DESCRIPTION OF THE INVENTION

The technical result, the obtaining of which is provided by the claimed composition, is the range of extension of the application of the articles (films, fibres and others) obtained from the composition. In addition, the properties and the composition of the copolymer of ion exchange used lead to the reduction of duration of the process and the reduction of the temperature of production of the composition, which is due to the simplification of the production process.

The technical result indicated is achieved by the fluid composition which contains perfluorinated ion exchange copolymer with functional groups -SO₃M, M-hydrogen ions or ions of alkali metals (EM greater than 900) and a polar organic solvent and a non-polar solvent, and as perfluorinated ion exchange copolymer, the composition contains a perfluorinated copolymer of ion exchange with a degree of crystallinity of 2 to 10% and a ratio between the density of the copolymer of ion exchange and the density of the original perfluorinated copolymer in non-ionic form of 0.90-0.97. The ratio of the components is, in % by weight:
Perfluorinated copolymer of ion exchange 1-35
Organic polar solvent or
Mixture of organic polar solvent with non-polar solvent 65-99

As for the perfluorinated copolymer of ion exchange, the fluid composition contains a hydrolysed copolymer of tetrafluoroethylene with vinyl ether that contains perfluorosulphide groups with an EM of 1000-2600 or a hydrolysed copolymer of tetrafluoroethylene with vinyl ether that contains perfluorosulphide groups and a third co-monomer chosen from the group that includes perfluoro-2-methylene-4-methyl-1,3-dioxalane and perfluoroalkyl vinyl ether (C₁-C₃ in alkyl) with an EM of 1000-2600. As polar organic solvent, the composition contains one or more solvents chosen from among the group that includes methanol, ethanol, isopropanol, n-propanol, isobutanol, n-butanol, cyclohexanone, acetone, methylethylketone, dimethylformamide, dimethylacetamide and dimethylsulphoxide. As non-polar solvent, the composition contains one or more non-polar solvents chosen from the group that includes 1,1,2-trifluoro-1,2-dichloroethane, 1,1 -difluoro-1,2-dichloroethane, 1,1,2-trifluorotrichloroethane, 1,1,1-trichlorobromoethane, 1,1-difluoro-1,2,2-trichloroethane, pentane, hexane, heptane, benzene or toluene.

The fluid composition contains polar organic solvent and a non-polar organic solvent with a ratio by weight of (1-10):1.

Investigations carried out by the authors of the invention show that the degree of crystallinity of the perfluorinated copolymer of ion exchange hydrolysed with functional groups -SO₃M, M-H or alkali metal, as has been demonstrated previously, has a strong influence on the solubility in the polar organic solvent or in the mixture of polar and non-polar solvents. It was observed that when the degree of crystallinity of the copolymer was from 2 to 10%, the structure of the copolymer was optimum for providing the necessary diffusion of the organic solvent that promotes the erosion of the copolymer. The increase in the degree of crystallinity to above 10% makes it impossible to produce a composition of high quality and the reduction in the degree of crystallinity to less than 2% leads to the deterioration of the physico-chemical properties of the films, fibres and other articles based on said compositions.

Using a perfluorinated copolymer of ion exchange with a relatively low density ratio (the ratio between the density of the copolymer in ionic form and the density of the same copolymer in its original non-ionic state) of 0.90-0.97, makes it possible to produce this composition. It was discovered that when the density ratio is less than 0.90 and greater than 0.97, it is impossible to obtain a fluid composition of hydrolysed fluorocopolymer of ion exchange with an EM of 1000-26000 with the required technical result. The reason is that when the density is greater than 0.97, the diffusion of the solvent is hindered and a stable solution of copolymer cannot be generated. When the density ratio is lower than 0.90, obtaining fluorocopolymer is hindered with the required degree of crystallinity and, therefore, the optimum structure necessary for the copolymer is not attained. Because of some significant properties of the articles obtained from such a composition, such as the permeability of gas required of the films and fibres, it is important that this structure provides the absorption and desorption of water and the organic solvents.

The use of a perfluorinated copolymer of ion exchange with a degree of crystallinity ranging from 2 to 10% and a ratio between the density of the ion exchange copolymer and the original non-hydrolysed copolymer between 0.90 and 0.97 and, therefore, with an optimum structure that facilitates the diffusion of the solvent, helps to produce solutions (compositions) of the copolymers with values for EM of 1000-26000 and concentrations of from 1 to 35% in 3-4 hours without using high temperatures. Distillation of the solvent is not required.

The degree of crystallinity of the perfluorinated copolymer of ion exchange that is used for the composition can be controlled by the conditions for synthesis of the original copolymer in non-ionic form, the injection of a third monomer into the copolymer or the conditions of hydrolysis when the copolymer is converted from non-ionic into the ion exchange form. The density ratio of fluorocopolymer that is used for producing the composition could be attained in two ways. The first is to regulate the density of the fluorocopolymer when it is converted from a non-ionic form into the ion exchange form.

As perfluorinated copolymer of ion exchange in the claimed fluid composition, the copolymer of tetrafluoroethylene with vinyl ether that contains perfluorosulphide groups is maintained (TFE-SVE). The EM of the copolymer ranges from 1000 to 2600 and the constitutional formula is as follows: 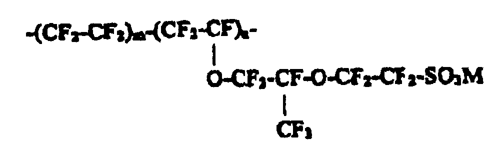
m = 64, 9-95.5 % in moles
n = 4, 4-35.1 % in moles
M = H, Na, K or Li.

As a third comonomer of modification in the aforementioned fluorocopolymer, perfluoro-2-methylene-4-methyl-1,3-dioxolane, perfluoroalkyl vinyl ether (C₁-C₃ in alkyl) could be used. In the following examples of the procedure of the invention, copolymers synthesised by the authors of the invention were used, with the following constitutional formulae:

### RTM SPL-1 with EM 1000

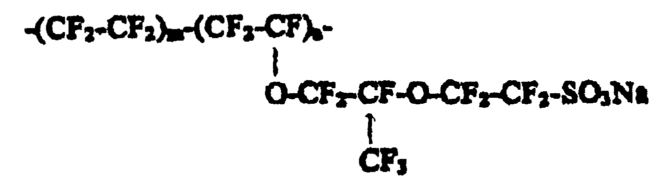

Here
m = 84.3% in moles
n = 15.7% in moles

### RTM SPL-2 with EM 2600

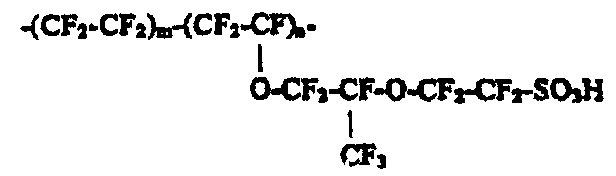

Here
m = 95.5% in moles
n = 4.5% in moles

### RTM SPL-3 with EM 1100

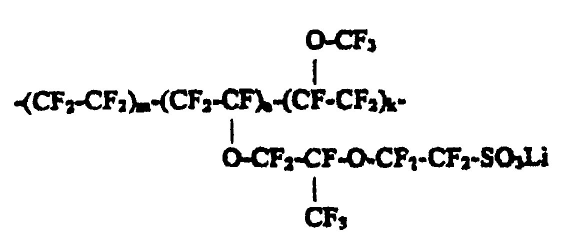

Here
m = 85.5% in moles
n = 13.1% in moles
k = 2.4% in moles

### RTM SPL-4 with EM 1070

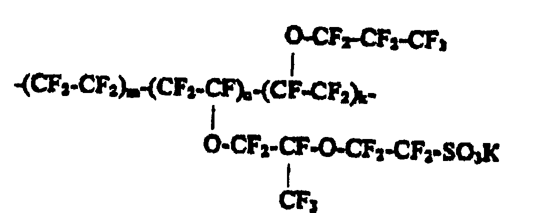

Here
m = 78.9% in moles
n = 15.8% in moles
k = 5.3% in moles

### RTM SPL-5 with EM 1600

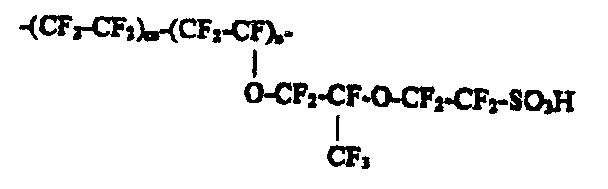

Here
m = 92.0% in moles
n = 8.0% in moles

### RTM SPL-6 with EM 1200

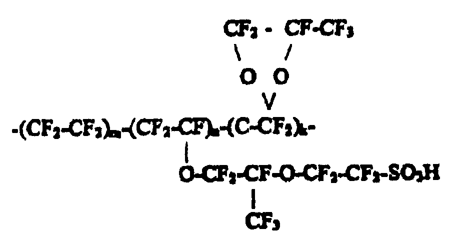

Here
m = 78.5% in moles
n = 13.1% in moles
k = 8.4% in moles

### RTM SPL-7 with EM 1700

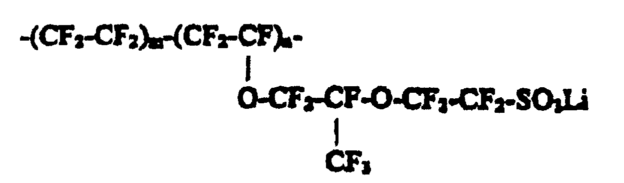

Here
m = 92.6% in moles
n = 7.4% in moles

The liquid composition claimed is obtained by dissolving the powder of the perfluorinated copolymer of ion exchange in a single solvent or in several polar organic solvents or in a mixture of a single solvent or of several polar solvents with a non-polar organic solvent (solvents) while stirring. The temperature for dissolving lies in the range of 20 and 90° C and is determined by the composition and the EM of the copolymer, as well as by the boiling point of the solvents used. The products were obtained from the composition by means of spraying or impregnation with raised temperatures by stages from room temperature up to 40-80° C, depending on the solvent used. A hollow fibre for separating gas was obtained by means of wet moulding.

The properties of the fluorine copolymer and the properties of the solutions obtained therefrom are determined in the following way:
1. The composition of copolymer of fluorine was defined by IR spectroscopy using a Perkin-Elmer 1760 spectrophotometer.
2. The EM of the fluorine copolymer was defined by means of RNS 17552-72.
3. The degree was obtained by means of a X-ray procedure using a low-angle dispersion chamber CRM-1 (KPM-1?).
4. The density of the copolymers of fluorine was defined by means of RNS 15139-69.
5. The viscosity of the composition was defined by means of RNS 9070-75E.
6. The resistance of the films produced from the copolymer was defined by means of RNS 14236-81.

### PREFERRED EMBODIMENT OF THE INVENTION

Examples are provided below that illustrate the present invention.

### Example 1

A TFA perfluorinated copolymer of ion exchange with was used with vinyl ether that contained perfluorosulphide groups, SPL-2, with a degree of crystallinity of 10% and an EM of 3600, with groups of ion exchange in the form of ―SO₃H and a ratio of densities of hydrolysed copolymer indicated and source of non-hydrolysed copolymer (relative density) of 0.97, in order to obtain the liquid composition.

Four grams of the indicated copolymer, SPL-2, in powder form, with a particle size ranging from 500 to 600 µm are introduced along with 196 g of polar organic solvent ― isopropyl alcohol (iso-propanol) in a 500 ml glass round-bottomed flask, which has a propeller stirrer, a thermometer and an inverted refrigerator. After this, the mixer is activated and the solution heated to 80° C. Stirring continued at this temperature for 4 hours. The flask is then cooled and the liquid composition obtained is filtered through a caprionic filter. The composition is a solution with a copolymer content of 2% by weight (2% by weight of SLP-2 and 98% by weight of isopropanol).

### Examples 2-10, 11-12 (assay)

A liquid composition was produced in a similar fashion to example 1, but the conditions and the structure of the composition were varied.

In Table 1, the structure of the compositions obtained in examples 2-10 and 11-12 (Assay) is shown along with the conditions for dissolving the copolymer (preparation of the composition) and the properties of the compositions.

### Example 13

The composition obtained in accordance with example 1 and which contains 2% by weight of SPL-2 copolymer with an EM of 2600 and 98% by weight of iso-propanol, was used as a binding agent for the preparation of the AEM.

0.9 g of electrocatalyst ― platinum black (with a particle size of 0.04 µm) are mixed with 0.03 g of non-active current conducting material ― carbon with a particle size of 0/001 µm, in a glass recipient. Then, 0.07 g of copolymer in the form of a composition in accordance with example 1 are added to the mixture obtained, particularly a solution at 2% of SPL-2 copolymer in iso-propanol. The viscous mass of electrode material obtained is applied to one of the surfaces dried under air of the IEM, representing a film 200 µm thick produced from SPL-2 copolymer, but with an EM of 1200 and a degree of crystallinity of 12%, rubbing against a layer of this thickness that, after drying the layer of material of the electrode, the thickness is 20 µm. Then, the AEM obtained is put in a thermostat and treated under the following temperature increase by stages: keeping at 20-22° C for 10 minutes, at 60° C for 40 minutes and at 80° C for 20 minutes. After this, the IEM is withdrawn from the thermostat, cooled to room temperature and, in the same fashion, the same electrode material is placed on the other surface, and after this, it is placed once more in the thermostat and treated in the same way. The EAM produced is assayed in the fuel cell in the following way. The carbon material impregnated by dispersion of polytetrafluoroethylene (Technical Coniditions ―TU 6-05-1246-81) is placed over the two surfaces of the layers of electrode of the AEM obtained and exposed to compression. Then, the carbon current collectors are applied to the two surfaces of the AEM and the set placed in a fuel cell. The investigations of the AEM are kept at 80° C, feeding the fuel cell by means of gas:hydrogen in anode cell at a pressure of 1 atm and oxygen in the cathode cell at a pressure of 1 atm. The following yield attributes were obtained:
Voltage at the element ― 0.78 ― 0.80 V;
Current density ― 0.5 A/cm².

The fuel cell works in stable fashion for 3000 hours. After this time, the process was interrupted and the AEM was withdrawn from the cell. Visual inspection of the AEM did not show any changes.

### Example 14

The composition obtained in accordance with example 2 was used. This contained 12% by weight of SLP-1 copolymer with an EM of 1000 and 88% by weight of methylethylketone to obtain a superacidic catalyst for the synthesis of 4-methyl-2-tretbutylphenol.

Granules of silica gel are placed in an Buchner funnel, and this is connected to a Bunzen flask. Afterwards, the flask is submitted to vacuum and the liquid composition is permanently added to the funnel such that all the granules that are covered. Then, after removing the solvent, the thickness of covering layer is 5-10 µm. The vacuum is then broken and the granules dried at 22° C for 20 minutes and at 40° C for 20 minutes. After withdrawing the granules from the solvent covered in SPL-1, which is the superacidic catalyst, they are used for dealkylation of 4-methyl-2,6-di-tretbutylphenol at 150° C for 50 minutes. The yield of 4-methyl-2,6-di-tretbutylphenol is 86%.

### Example 15

The composition obtained in accordance with example 3 was used. This contains 8% by weight of SPL-4 copolymer with an EM of 1070 and 92% by weight of acetone, to prepare a membrane for gas separation with a uniform film.

The membrane of a uniform film is prepared by spraying the indicated composition onto glass such that this layer, after eliminating the film of solvent, has a thickness of 40 µm. The glass with the composition is put in a thermostat and the solvent evaporated off with gradual increases in temperature from 22 to 40° C for 40 minutes (at 22° C for 10 minutes and at 40° C for 30 minutes). The film is separated from the glass and used as a membrane for separation of gases. An initial gaseous mixture of hydrogen fluoride and 1,1,2-trichlorotrifluoroethane (80% by volume of hydrogen fluoride and 20% by volume of 1,1,2-trichlorotrifluoroethane) is administered to a high-pressure recipient. The partial pressure differential of the hydrogen fluoride at the membrane is 50 kPa. The selectivity coefficient obtained based on the analysis of the composition and the quantity of gaseous mixture in the entrance chamber is approximately 1 x 10³, with a hydrogen fluoride concentration in the productivity of the element of 0.251 m³/m² hour of gaseous mixture.

### Example 16

The composition obtained in accordance with example 9, which contained 7% by weight of SPL-6 copolymer with an EM of 1200 and 93% by weight of isopropanol and mixture of benzene (ratio of mases of 10:1) was used when the ion exchange membrane was produced as a uniform film.

The membrane as a uniform film is prepared by spraying the composition onto glass with a layer such that after eliminating the solvent film the thickness of the film is 200 µm. The glass with the composition is put in a thermostat, the solvent evaporated off at gradual temperature increases with an exposure at 22° C for 10 minutes and at 75° C for 40 minutes. After withdrawing the solvent, the membrane (film) had a thickness of 205 µm and a resistance to traction of 2.78 x 10⁷ Pa. The film obtained was used as a membrane when the AEM was produced for the aqueous electrode.

0.91 g of electrocatalyst - platinum black (with a particle size of 0.06 µm) are mixed with 0.04 g of copolymer in the form of a solution at 1.8 % of SPL-5 copolymer with an EM of 920 and a degree of crystallinity of 2% in a glass recipient to produce the electrode material. The viscous mass of electrode material obtained is applied to one of the surfaces of the IEM indicated, in form a an air-dried film, spraying the composition with a layer such that after eliminating the solvent from the layer the electrode material has a platinum load of 1.2 mg/cm². Then, the AEM obtained is put in a thermostat and treated with gradual temperature increases by stages: exposure at 40° C for 15 minutes and at 70° C for 40 minutes. After this, the IEM is withdrawn from the thermostat, cooled to room temperature and, in the same fashion, the same electrode material is placed on the other surface, and after this, it is placed once more in the thermostat and treated in the same way. The EAM produced is assayed for aqueous electrolysis. The porous titanium current collector with lead traps the EAM on both sides, the set obtained is compacted with the help of arched plates, submerged in a recipient with distilled water and an electric current applied with an intensity of 0.5-1 A/sm² at 90° C for 1 hour. The IEM obtained is installed in the cell for electrolysis of sterilised water. The voltage at the block was 1.69 V at a current density of 1 A/cm³ and a temperature of 110° C.

### Example 17

The composition obtained in accordance with example 10, which contained 6% by weight of SPL-7 copolymer with an EM of 1700 and 94% by weight of a mixture of iso-propanol and heptane (ratio of mases 2:1) was used when a film was produced for the production of a sensor for air humidity.

The film is obtained by spraying the composition over the glass surface such that the layer formed on the surface of the glass has a thickness of 40 µm and dimensions of 50 x 50 cm. The glass with the composition is placed in thermostat and the solvent evaporated with gradual increases in temperature from 22° C for 10 minutes to 70° C for 20 minutes and 80° C for 20 minutes. After this, the glass with the SLP-7 film formed on it is used as a sensitive element for a humidity sensor of air that functions according to the principle of change in electrical resistance when the dryness of the film changes. The device with the indicated humidity sensor responds to changes in humidity of air within the limits of 20 to 100%.

### Example 18

The composition obtained in accordance with example 6 and which contained 10% by weight of SPL-5 copolymer with an EM of 1600 and 90% by weight of ethanol and dimethylformamide at a mass ratio of 1:1, was used when a hollow fibre for separation of gases was produced.

The hollow fibre was produced in a plant at a laboratory scale by means of wet process in a bath that contained 80% by weight of water and 20% by weight of ethanol. The internal diameter of the fibre was 80 µm, with a wall thickness of 40 µm.

The hollow fibre obtained was used in a device for separation of gases to separate ammonia from mixture of ammonia and hydrogen.

The gaseous mixture, which consisted of 50% by volume of ammonia and 50% by volume of hydrogen, was introduced into the pre-dampened hollow fibre with water vapour, at a pressure of 100 kPa and at 22° C. The coefficients of permeability of the gases that formed the mixture were calculated on the basis of the analysis of the gaseous composition outside the fibre. These were 3.82 x 10⁻¹¹ for ammonia and 1.99 x 10⁻¹⁵ moles.m/m²s, Pa, for the hydrogen, and the coefficient of selectivity was 1.92 x 10⁴ in favour of the ammonia. After separation, the mixture contained 99.8% by volume of ammonia and 0.2% by volume of hydrogen.

The composition claimed, in comparison with the composition in accordance with the prototype, contains a perfluorinated copolymer of ion exchange with a greater range of equivalent masses. The composition claimed contains a copolymer with an EM of 1050 to 1500, in other words, it is greater than 1100. In addition, the products of the composition claimed have a greater mechanical resistance. For example, the membrane with a thickness of 205 µm of the claimed composition has a resistance of 27.8 MPa, while the membrane obtained from the prototype composition has a resistance of only 17.5 MPa.

Such a broad range of EM of the copolymer of ion exchange in the claimed composition and also the high resistance of the articles produced therefrom (films and fibres) allow a significantly broad field of practical applications of the composition claimed in comparison with known compositions (in accordance with the analogue prototype compositions). The films, fibres and other products of the claimed composition are obtained without any additive or material of reinforcement. They can be used directly as IEM during aqueous electrolysis, in fuel cells, devices for separation of gases, humidity sensors and similar devices.

In addition, the compositions claimed that contain copolymer with an EM greater than 1500 can be used during the production of membranes for gas separation suitable for the separation of gaseous mixtures with high contents of non-specific components and which provide the production of separable gases with a high degree of purity, and also during the production of very sensitive air humidity sensors, allowing more exact control of air humidity in closed volumes.

The procedures for obtaining the composition claimed are significantly simpler than the procedure for production of the composition in accordance with the prototype, as they are performed in gentler conditions ―under atmospheric pressure and at 20-95° C instead of at 170-250° C and self-pressure in accordance with the prototype, and in addition, the stage of concentration of the composition is omitted, as the composition claimed is obtained once and for all in the form of a solution with the required concentration. In addition, the duration of the process for production of the composition in accordance with the prototype is shortened by between 2 and 6.5 times (from 3-18 hours to 1.5-4 hours).

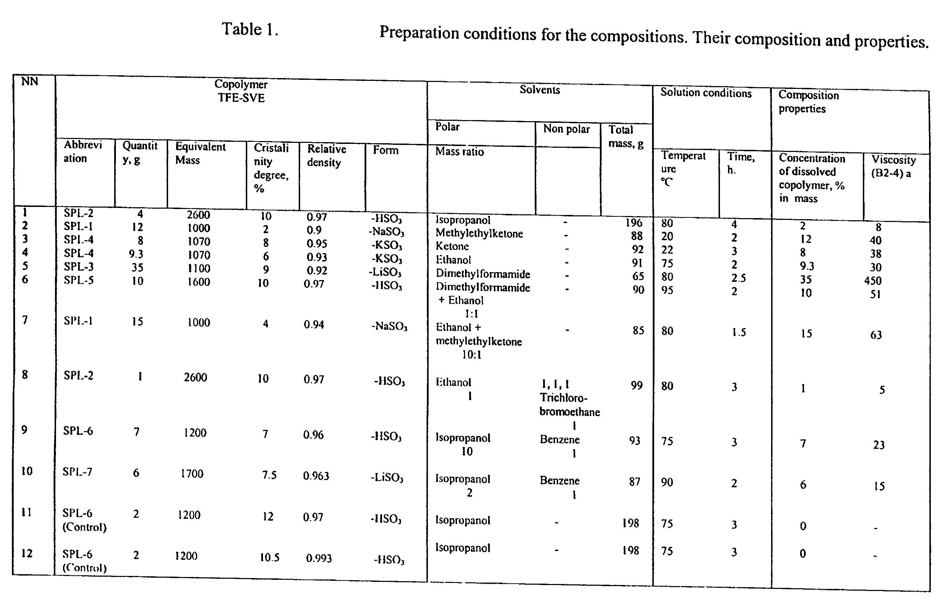

## Claims

1. A fluid composition that contains perfluorinated copolymer of ion exchange with functional groups ―SO₃M, M-hydrogen ions or ions of alkali metals (EM greater than 900) and a polar organic solvent and a non-polar solvent, and as perfluorinated ion exchange copolymer, the composition contains a perfluorinated copolymer of ion exchange with a degree of crystallinity of 2 to 10% and a ratio between the density of the copolymer of ion exchange and the density of the original perfluorinated copolymer in non-ionic form of 0.90-0.97. The ratio of the components is, in % by weight:
Perfluorinated copolymer of ion exchange 1-35
Organic polar solvent or Mixture of organic polar solvent with non-polar solvent 65-99

2. A composition according to claim 1, **characterised in that** as perfluorinated copolymer of ion exchange, it contains a hydrolysed copolymer of tetrafluoroethylene with vinyl ether that contains perfluorosulphide groups with an equivalent mass of 1000-2600.

3. A composition according to claim 1, **characterised in that** as perfluorinated copolymer of ion exchange, it contains a hydrolysed copolymer of tetrafluoroethylene with vinyl ether that contains perfluorosulphide groups and a third comonomer chosen from the group that includes perfluoro-2-methylene-4-methyl-1,3-dioxalane and perfluoroalkyl vinyl ether (C₁-C₃ in alkyl) with an equivalent mass of 1000-2600.

4. A composition according to claims 1 to 3, **characterised in that** as polar organic solvent, it contains one or more solvents chosen from among the group that includes methanol, ethanol, isopropanol, n-propanol, isobutanol, acetone, methylethylketone, cyclohexanone, dimethylformamide, dibutylformamide, dimethylacetamide and dimethylsulphoxide.

5. A composition according to claims 1 to 4, **characterised in that** as non-polar organic solvent, it contains one or more organic solvents chosen from the group that includes 1,1,2-trifluoro-1,2-dichloroethane, 1,1 -difluoro-1,2-dichloroethane, 1,1,2-trifluorotrichloroethane, 1,1,1-trichlorobromoethane, 1,1-difluoro-1,2,2-trichloroethane, pentane, hexane, heptane, benzene or toluene.

6. A fluid composition of claims 1 to 5 that has the following distinctive characteristic: it contains a polar organic solvent and a non-polar organic solvent in a ratio of masses of (1-10):1.
